Europäisches Patentamt

European Patent Office

Office européen des brevets

(11) Publication number: **0 220 441**
**A1**

## (12) EUROPEAN PATENT APPLICATION

(21) Application number: 86112393.3

(51) Int. Cl.4: **B60G 5/02**

(22) Date of filing: 08.09.86

(30) Priority: 20.09.85 GB 8523352
05.12.85 GB 8530003

(43) Date of publication of application:
06.05.87 Bulletin 87/19

(84) Designated Contracting States:
AT BE CH DE FR IT LI LU NL SE

(71) Applicant: **NORDE SUSPENSIONS LIMITED**
**Sywell Airport**
**Northampton NN6 OBU(GB)**

(72) Inventor: **Roberts, Richard Walter**
**2 The Heights Market Harborough**
**Leicestershire LE16 8BQ(GB)**

(74) Representative: **Houghton, David et al**
**Hulse & Co. Cavendish Buildings West**
**·Street**
**Sheffield, S1 1ZZ(GB)**

(54) Road vehicle suspension systems.

(57) The invention relates to road vehicle suspension systems particularly of the tandem axle type where two transversely disposed axles are positioned towards opposite ends of two longitudinally disposed beam-like members (1). With known constructions there can be excessive twisting of the beams in use because of the difficulty in ensuring that the lines of actions through fixing brackets locating the beams on the vehicle and springs interposed between the beams and the vehicle cannot be coincident. The object of the invention is to provide a means of eliminating a twisting moment applied to the beams - (1) which objective is met by a construction comprising two transversely disposed axles secured to two longitudinally disposed beam-like members with there being at least one cross member (4) extending between the beam-like members, each end of the cross member(s) penetrating the respective beam-like member to engage locating means (5,6) within the beam-like member.

Fig. 1

## ROAD VEHICLE SUSPENSIONS SYSTEMS

This invention relates to road vehicle suspension systems, and is particularly concerned with suspension systems of the tandem axle type, where two transversely disposed axles each carrying road wheels are positioned in spaced relationship along the length of the vehicle, and are secured to and supported by two longitudinally disposed beam members extending between the axles, one to either side of the vehicle.

With certain types of axle, fixing brackets for attachment to the beams, must be at minimum centres to avoid the application of excessive bending moments to the axle. Ideally, the lines of action through the fixing brackets and through the springs, should be coincident, but where narrow tyre spacings are involved, the fixing brackets would have to be set inboard to an unacceptable degree. Thus with the fixing brackets located close to the position of the road wheels it is inevitable that the beams must be secured to the innermost faces of the brackets, and consequently, the longitudinal centre line of a beam is offset from the longitudinal centre line through the respective brackets, one on each axle, to which that beam is secured. This has the inevitable effect of a twisting moment being applied to the beam during normal road usage, of a degree determined by the extent to which the two centre lines are offset.

With conventional leaf springs used as the suspension means, a relatively narrow beam can be employed, minimising the degree of offset of the centre lines, and leaf springs are of a nature that can tolerate applied bending moments. However, excessive twisting of the beam can cause damage to the connections between the beams and the brackets. With suspension systems employing known rubber blocks, the problems arising from twisting of the beam, are increased, firstly because a wider beam is needed, increasing the offset between the beam and bracket longitudinal centre lines, with a consequent increase in the twisting moment applied to the beam, and secondly because the rubber blocks are not designed to withstand applied twisting or bending moments. This is especially troublesome with the type of rubber suspension system employing beams formed from plate-like side member, and where the rubber blocks are located on a mounting member pivotally secured between the plates. Here the degree of offset between the respective centre lines is particularly large.

The object of the present invention is to provide a tandem axle suspension system where twisting of the beam under an applied twisting moment is substantially eliminated.

According to the present invention, a tandem axle suspension system comprises two transversely disposed axles secured to two longitudinally disposed beam-like members, and there being at least one cross member extending between the beam-like members, each end of the cross member penetrating the respective beam-like member to engage locating means within the beam-like member.

The locating means within the beam-like member may comprise a support tube extending transversely across the interior of the beam and disposed co-axially with a through-hole in the inner face of the beam, and whereby the cross-member can pass through the hole and lie within the support tube, the support tube being engaged by shackle means secured internally of the beam.

Alternatively, the locating means within the beam-like member may comprise a support tube extending transversely across the interior of the beam with opposite ends of the support tube extending through and being secured within co-axial holes to opposite sides of the beam.

Thus with axles of the type discussed above, having widely set fixing brackets for the beam-like members, the inevitable twisting moments imposed on the beam-like members causes the beam-like member to attempt to twist, and applies a load to the cross member through the locating means within the beam-member. This automatically generates a reactive force at the opposite end of the cross member taken by the other beam-like member through the locating means within that beam-like member.

As a result, actual twisting of the beam-like members during usage is resisted, and is substantially eliminated.

Whilst this is of advantage with suspension systems employing conventional leaf springs, by preventing damage at the connections of the beam-like members to the axles, the further advantage of the invention is that it allows for the first time, the employment of a rubber suspension system with axles having widely set fixing brackets. The still further advantage is that beam-like members where the rubber suspension system is located between spaced plate-like members can be employed, despite their greater width, enabling the use of a suspension system of reduced height as is required by some vehicles, in combination with axles with widely set fixing brackets for the beam like members.

Whilst, e.g., two longitudinally spaced cross beams can be employed, one such cross beam is sufficient to sustantially eliminate twisting of the beam-like members, and when, preferably, the cross beam penetrates the beams at their centre points. When the beam-like member has a mounting member for a rubber suspension system pivotally located between side plates of the beam-like member, it is preferred that the cross member penetrates along the axis of the pivotal connection of the mounting member.

Two embodiments of the invention wil now be briefly described by way of example ony, with reference to the accompanying drawings in which:-

Figure 1 is a transverse section through a first embodiment of a tandem axle suspension system of the invention at the point of connection of a cross beam;

Figure 2 is a section on the line 2-2 of Figure 1; and

Figure 3 corresponds to Figure 1 but shows a second embodiment of the invention.

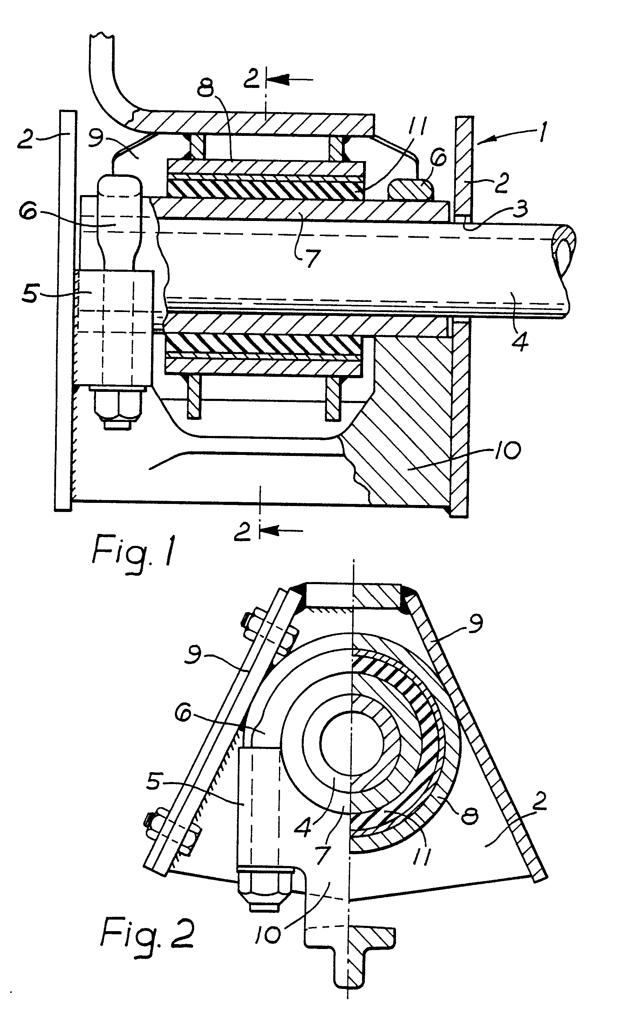

In the drawings a beam 1 of a tandem axle suspension system comprises two spaced side plates 2 secured to and spaced by a number of cross plates (not shown). The innermost side plate 2 is provided with a through hole 3, through which extends one end of a cross member 4 formed by a metal tube to provide high strength in combination with low weight. The cross member extends across the full width of the beam such that its outermost end lies in close proximity to the outermost side plate 2. Within the beam, location means for the end of the cross member are provided. Thus, there is secured to the inner face of the outer side plate 2 a support member 5 for a U-shaped shackle 6 that embraces the end of a support tube 7 extending across the beam, which support tube acts as the pivot of a mounting member 8 having (as is shown particularly by Figure 2) inclined mounting plates 9 to which are secured the rubber blocks of a rubber suspension system (not shown). The tube 7 is further supported within the beam by a further support member 10 secured between the plates. Thus, the cross member 4 extends through the hole in the inner plate and through the tube 7.

The mounting member 8 for the rubber suspension system is shown to be located on the tube 7 through an interposed rubber bush 11.

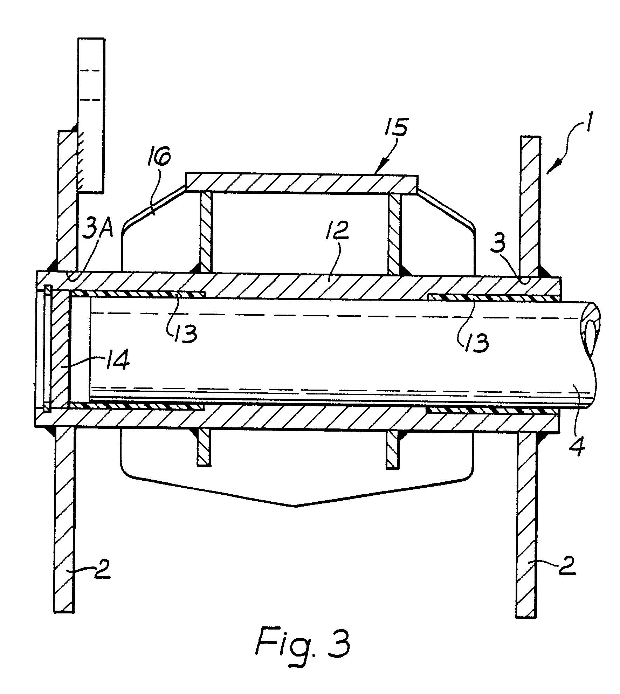

In the embodiment illustrated in Figure 3, there is again illustrated a beam 1 of a tandem axle system comprising two spaced plates 2 secured to and spaced by a number of cross-plates (not shown). In this embodiment, the innermost side plate 2 is provided with a through-hole 3, and the outermost side plate with a co-operating, co-axial hole 3A. Extending through the holes and across the side plates is a metal support tube 12 suitably secured to each side plate, e.g. by welding. At each end, the bore of the support tube 12 is counterbored and in each counterbore is fitted a removable sleeve 13 of resilient plastics material, of an inner diameter to be a loose fit on a cross-member 4 formed by a metal tube, that extends across the full width of the beam 1, such that its outermost end lies in close proximity to the outermost side plate 2. Secured within the end of the support tube 12, adjacent the outermost side plate 2, is a stop means 14 to restrict lateral movement of the cross-member to within the support tube.

Secured to the support tube 12 between the side plates 2, is a mounting block 15 for a rubber suspension system, the rubber bolsters (not shown) of which are secured to the inclined side plates 16 of the mounting block. With this second embodiment of the invention there is the advantage of the provision of readily replaceable wear liners, the sleeves 13, within the support tube.

The efficiency of the support provided for the cross member within the beam in both embodiments described above, is such that any tendency for the beam to twist on the application of twisting moments is most effectively resisted by the cross member and the reactive forces set up at the identical connection of the cross member to the second beam (not shown) to the opposite side of the vehicle.

## Claims

1. A tandem axle suspension system comprising two transversely disposed axles secured to two longitudinally disposed beam-like members, characterised in that there is at least one cross member (4) extending between the beam-like member (1), each end of the cross member (4) penetrating the respective beam-like member (1) to engage locating means (5, 6, 7, 12) within the beam-like member (1).

2. A tandem axle suspension system as in Claim 1, characterised in that the locating means within each beam for the or each cross member - (4) comprises a support tube (7) extending transversely across the interior of the beam and disposed co-axially with a through-hole (3) in the inner face (2) of the beam, and whereby the cross-member can pass through the hole and lie within the support tube, the support tube being engaged by shackle means (6) secured internally of the beam.

3. A tandem axle suspension system as in Claim 2, characterised in that a mounting member - (8) for a suspension system is located on the support tube (7).

4. A tandem axle suspension system as in Claim 2 or Claim 3, characterised in that a support member (10) for the support tube is provided within the beam.

5. A tandem axle suspension system as in Claims 3 and 4, characterised in that the mounting member (8) for a suspension system has inclined mounting plates (9) to which are secured the rubber blocks of a rubber suspension system.

6. A tandem axle suspension system as in Claim 1, characterised in that the locating means within the beam for the or each cross-member (4) is characterised by a support tube (12) extending transversely across the interior of the beam with opposite ends of the support tube (12) extending through and being secured within co-axial holes (3, 3A) to opposite sides of the beam.

7. A tandem axle suspension system as in Claim 6, characterised in that a mounting member - (15) for a suspension system is located on the support tube (12).

8. A tandem axle suspension system as in Claim 6 or Claim 7, characterised in that a stop means (14) is located within the support tube (12) towards its outermost end to restrict lateral movement of the cross-member.

9. A tandem axle suspension system as in any of Claims 6 to 8, characterised in that a counterbore is provided at each end of the support tube - (12) and a removable wear sleeve (13) fitted into each counterbore.

10. A tandem axle suspension system as in Claim 9, characterised in that the removable wear sleeves (13) are formed from a resilient plastics material.

11. A tandem axle suspension system as in any of Claims 7 to 10, characterised n that the mounting member (15) for a suspension system has inclined side plates (16) to which are secured the rubber blocks of a rubber suspension system.

Fig. 1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 817 551  (G. MOORE)<br>* Column  2, line 48 - column 3, line 24; figures 1-4 * | 1 | B 60 G    5/02 |
| A |  | 2,3,5 7,11 | |
| | --- | | |
| X | US-A-2 493 004  (MACKIE)<br>* Column 3, line 25 -  column  4, line 72; figures 1-3 * | 1 | |
| A |  | 2-4,6 8 | |
| | --- | | |
| A | US-A-3 458 214  (WEST)<br><br>*  Column  4, lines 35-58; column 5, lines 7-24; figures 1-4 * | 1,2,6 8 | **TECHNICAL FIELDS SEARCHED (Int. Cl.4)** |
| | --- | | B 60 G |
| A | US-A-3 936 073  (HICKMAN)<br>* Column  2,  lines  11-15,41-60; figures 1,2,4 * | 1,6 | B 60 F<br>B 60 K<br>B 62 D |
| | --- | | |
| A | US-A-2 124 149  (REDHEAD)<br>* Page 2; left-hand column, lines 29-54; figures 1,3,4 * | 1,6,8 | |
| | --- | | |
| A | US-A-3 081 292  (BENNETT)<br>* Figures 5,11,14 * | 5,11 | |
| | ---         -/- | | |

The present search report has been drawn up for all claims

| Place of search | Date of completion of the search | Examiner |
|---|---|---|
| THE HAGUE | 27-01-1987 | ESPEEL R.P. |

EPO Form 1503 03 82

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | NL-A-8 101 914 (EVENHUIS)<br>* Page 3, lines 26,27; figures 2-4 * | 1,6,9 | |
| A | US-A-3 083 980 (PAGE)<br>--- | | |
| A | US-A-3 017 195 (HICKMAN)<br>--- | | |
| A | FR-A-2 101 995 (GENERAL TIRE AND RUBBER CO.)<br>----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 27-01-1987 | ESPEEL R.P. |